# EUROPÄISCHE PATENTANMELDUNG

(11) **EP 0 649 236 A2**
(43) Veröffentlichungstag der Anmeldung: **19.04.1995**
(21) Anmeldenummer: 94115078.1
(22) Anmeldetag: 24.09.1994
(51) Int. Cl.: H04L 25/08

(54) **Schaltungsanordnung zur digitalen Datenübertragung**

(30) Priorität: 08.10.1993 DE 4334289
(71) Anmelder: KE KOMMUNIKATIONS-ELEKTRONIK GMBH & CO, D-30179 Hannover (DE)
(72) Erfinder: Fritz, Wolfgang, D-30165 Hannover (DE)
(74) Vertreter: Döring, Roger, Dipl.-Ing.

(57) **Zusammenfassung**

Es wird eine Schaltungsanordnung zur digitalen Datenübertragung zwischen einer Vermittlungsstelle (VST) eines Fernmeldenetzes und an dieselbe über Leitungen (B) angeschlossenen Teilnehmern (Tln) angegeben, bei welcher in räumlicher Nähe der Teilnehmer (Tln) ein Endverzweiger (EVZ) mit einem Netzabschluß (NT) in den Übertragungsweg eingeschaltet ist. Zwischen dem Endverzweiger (EVZ) und den Teilnehmern (Tln) sind Leitungen (B) mit metallischen Leitern verwendet. An jede dieser Leitungen (B) sind mindestens zwei bei Teilnehmern (Tln) befindliche Endeinrichtungen zum Senden und Empfangen von Daten angeschlossen. In dem Netzabschluß (NT) ist für jede angeschlossene Leitung (B) ein Phasendetektor angeordnet. Jede Endeinrichtung hat einen Phasenschieber zur zeitlichen Verschiebung der Sendedaten. Die von einer Endeinrichtung gesendeten Daten werden nach Maßgabe eines vom Phasendetektor ausgesandten Korrektursignals vom Phasenschieber dieser Endeinrichtung in eine bestimmte Phasenlage gebracht.

## Beschreibung

Die Erfindung bezieht sich auf eine Schaltungsanordnung zur digitalen Datenübertragung zwischen einer Vermittlungsstelle eines Fernmeldenetzes und an dieselbe über Leitungen angeschlossenen Teilnehmern, bei welcher in räumlicher Nähe der Teilnehmer ein Endverzweiger mit einem Netzabschluß in den Übertragungsweg eingeschaltet ist (DE-Z "ntz" Bd. 46 (1993) Heft 1, Seiten 22 bis 28).

In Fernmeldenetzen werden herkömmliche Kupferkabel und in immer stärkerem Maße optische Kabel mit Lichtwellenleitern - im folgenden kurz als "LWL" bezeichnet - eingesetzt. Das erklärte Ziel besteht darin, die LWL als Übertragungsmedium optischer Signale im gesamten Fernmeldenetz, also im Anschlußleitungsnetz, einzusetzen und damit nach Möglichkeit bis zu jedem einzelnen Teilnehmer zu führen (Fibre to the home). Mittels der LWL sollen die mit diesem Übertragungsmedium möglichen hohen Übertragungsraten den Teilnehmern zur Verfügung gestellt werden. Die bisher separaten Anschlußleitungen für die unterschiedlichen Dienste können dabei durch nur einen LWL-Anschluß ersetzt werden. Diese Dienste umfassen heute u. a. Telefon, Telefax, Telex, Teletex, IDN und ISDN (Basis- und Primärmultiplexanschlüsse). Für ein solches Verzweigernetz werden geeignete Geräte, insbesondere bei den Teilnehmern, und preiswerte Glasfaser-Übertragungssysteme benötigt.

Ein derartiges Anschlußleitungsnetz ist in der oben erwähnten DE-Z "ntz" beschrieben. Es ist unter der Bezeichnung "Opal" als Pilotprojekt der DBP Telekom bekannt. Die Teilnehmer sind darin über Glasfasern bzw. LWL mit einer Vermittlungsstelle verbunden. Dabei ist von der Vermittlungsstelle ausgehend ein LWL bis zu einem optischen Verteiler geführt, von dem aus mehrere LWL zu einer Anzahl von Teilnehmern weitergeführt sind. In diesem passiven Anschlußleitungsnetz wird die Lichtleistung je nach Anzahl der Teilnehmer aufgeteilt, was zu einer Beschränkung der Teilnehmeranzahl führt. Die Reichweite der Übertragung und die Übertragungsraten sind außerdem begrenzt.

Der Erfindung liegt die Aufgabe zugrunde, die eingangs geschilderte Schaltungsanordnung so zu gestalten, daß die Vorteile der optischen Nachrichtenübertragung mit ihren hohen Übertragungsraten auch im Anschlußleitungsnetz für eine nicht beschränkte Anzahl von Teilnehmern ausgenutzt werden können.

Diese Aufgabe wird gemäß der Erfindung dadurch gelöst,
- daß zwischen dem Endverzweiger und den Teilnehmern Leitungen mit metallischen Leitern verwendet sind,
- daß an jede dieser Leitungen mindestens zwei bei Teilnehmern befindliche Endeinrichtungen zum Senden und Empfangen von Daten angeschlossen sind,
- daß in dem Netzabschluß für jede angeschlossene Leitung ein Phasendetektor angeordnet ist,
- daß in jeder Endeinrichtung ein Phasenschieber zur zeitlichen Verschiebung der Sendedaten angeordnet ist und
- daß die von einer Endeinrichtung gesendeten Daten nach Maßgabe eines vom Phasendetektor ausgesandten Korrektursignals vom Phasenschieber dieser Endeinrichtung in eine bestimmte Phasenlage gebracht werden.

Von den Endverzweigern führen elektrische Leitungen zu den Endeinrichtungen der Teilnehmer, die bei richtiger Anordnung der Endverzweiger relativ kurz gehalten werden können. Ein entsprechend aufgebautes Anschlußleitungsnetz ist mit heute vorhandenen Mitteln ohne großen Aufwand realisierbar. Es kann daher sofort eingesetzt werden, zumal in den Räumlichkeiten der Teilnehmer selbst bzw. in deren Gebäuden keine wesentlichen Änderungen durchgeführt werden müssen. Die von den Endverzweigern zu den Endeinrichtungen der Teilnehmer führenden elektrischen Leitungen können so kurz ausgeführt werden, daß jedem Teilnehmer problemlos Übertragungskanäle mit einer Übertragungsrate von beispielsweise 2,56 Mbit/s angeboten werden können. Wegen der hohen Übertragungsraten kommt es aber trotz der kurzen Länge der Leitungen zu Laufzeitunterschieden der Daten der einzelnen, an eine Leitung angeschlossenen Endeinrichtungen. Die Laufzeitunterschiede können mehrere Bits betragen. Das führt am Netzabschluß zur Überlagerung der Daten unterschiedlicher Endeinrichtungen. Um dadurch bedingte Übertragungsfehler auszuschalten, wird mittels des Phasendetektors und der Phasenschieber ein Laufzeitausgleich durchgeführt. Es wird dadurch erreicht, daß am Netzabschluß die von den verschiedenen Endeinrichtungen kommenden Daten zeitlich so vorliegen, daß das Summensignal ein kontinuierliches Signal mit möglichst geringem Jitter bildet. Zusätzlich kann die Phasenlage der ankommenden Daten so eingestellt werden, daß im Netzabschluß der Sendetakt auch als Empfangstakt verwendet werden kann. Im Netzabschluß muß daher keine Taktrückgewinnung aus den ankommenden Daten erfolgen.

Die Schaltungsanordnung nach der Erfindung wird im folgenden anhand der Zeichnungen als Ausführungsbeispiel erläutert.

Es zeigen:
Fig. 1 in schematischer Darstellung einen Ausschnitt aus einem Fernmeldenetz.
Fig. 2 den Aufbau eines zu den Teilnehmern gesendeten Datensignals.
Fig. 3 den Datenbereich des Datensignals nach Fig. 2
Fig. 4 den Aufbau eines von den Teilnehmern gesendeten Datensignals.

Im folgenden werden folgende Abkürzungen bzw. Bezeichnungen verwendet:
- NT =: Netzabschluß.
- TEE =: Teilnehmer-Endeinrichtung.
- "Container" =: Zusammenfassung von Steuerinformationen und Nutzdaten.
- "Downstream" =: Senderichtung vom Netzabschluß zu den Teilnehmern.
- "Upstream" =: Senderichtung von den Teilnehmern zum Netzabschluß.

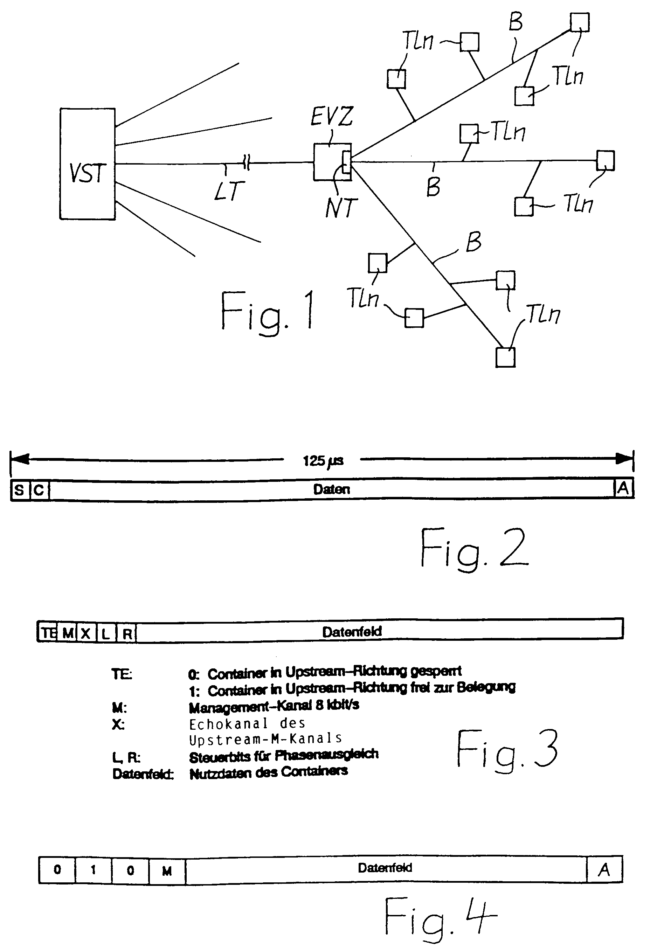

Von der in Fig. 1 dargestellten Vermittlungsstelle VST geht eine Leitung LT bis zu einem Endverzweiger EVZ. Die Leitung LT kann elektrische Leiter oder optische Leiter (Lichtwellenleiter) oder beide Leiterarten aufweisen. An eine VST kann eine große Anzahl von EVZ über Leitungen LT angeschlossen sein. Der EVZ befindet sich in räumlicher Nähe von Teilnehmern Tln. Zwischen dem EVZ und den Tln sind Leitungen B - im folgenden als "Bus" bezeichnet - angeordnet, die mit metallischen Leitern ausgerüstet sind. Jeder Bus ist vorzugsweise als Vierdrahtleitung ausgeführt. An jeden Bus sind mindestens zwei TEE angeschlossen. Im EVZ ist ein Netzabschluß NT angebracht, an den alle Busse angeschlossen sind. Jeder Tln ist mit mindestens einer TEE ausgerüstet.

Die EVZ werden so nahe wie möglich bei möglichst mehreren Tln installiert, um die Busse kurz halten zu können. Wenn ein Tln oder mehrere Tln sich in der Nähe einer VST befindet bzw. befinden, kann die VST selbst als EVZ dienen. Der NT wäre dann in der VST angeordnet.

Neben anderen, grundsätzlich bekannten Bauteilen ist im NT ein Phasendetektor angebracht. Alle TEE sind mit einem Phasenschieber ausgerüstet. Als Phasenschieber können beispielsweise Schieberegister oder programmierbare Zeitglieder verwendet werden.

Die bei den Tln vorhandenen TEE können unterschiedlich sein. Es gibt beispielsweise die folgenden, in der Praxis bereits im Einsatz befindlichen Grundtypen:

| | |
|---|---|
| Typ 1 | analoger Telefonanschluß |
| Typ 2 | ISDN-Basisanschluß |
| Typ 3 | Übertragungssysteme mit 2,048 Mbit/s synchron |
| Typ 4 | Übertragungssysteme mit 2,304 Mbit/s synchron |

Weitere Typen von TEE (z. B. 2,048 Mbit/s plesiochron) werden von diesen Grundtypen abgeleitet.

Die Daten werden, wie bei der digitalen Übertragung üblich, in Rahmen von beispielsweise 125 µs Länge übertragen. Dabei ist der Rahmenaufbau in Downstream-Richtung einerseits und in Upstream-Richtung andererseits unterschiedlich. In Downstream-Richtung sendet der NT ein kontinuierliches Datensignal zu den TEE. Alle TEE synchronisieren sich auf dieses Datensignal und lesen die für sie bestimmten Daten (Container) ein. In Upstream-Richtung senden die TEE ihre Container ebenfalls zu bestimmten Zeiten auf den Bus. Diese Zeiten werden so eingestellt, daß am NT ein kontinuierlicher Datenstrom vorliegt.

Der Rahmen des vom NT gesendeten kontinuierlichen Datensignals geht beispielweise aus Fig. 2 hervor. Er hat eine Länge von 125 µs. Die ersten beiden Bits sind ein Synchronbit S und ein Synchron-Prüfbit C. Am Ende des Rahmens ist ein Ausgleichsbit A vorhanden, das bei bestimmten Leitungscodes zur Vermeidung eines Gleichspannungsanteils benötigt wird. Dazwischen liegt der mit dem Wort "Daten" eingetragene Datenbereich. Dieser enthält die Downstream-Container aller angeschlossenen TEE. Der Aufbau eines Downstream-Containers geht beispielsweise aus Fig. 3 hervor:
Das Bit TE dient im wesentlichen der Sendefreigabe. Nur wenn TE = 1 ist, darf von einer TEE, die sich auf das Datensignal des NT synchronisiert hat und Daten senden will, ein Container in Upstream-Richtung gesendet werden. Das Bit M steht für den sogenannten Managementkanal. Er dient für Überwachungs- und Steuerzwecke. Das Bit X ist der Echokanal des Upstream-M-Kanals. Es dient der Zugriffssteuerung beim Verbindungsaufbau. In dieses Bit spiegelt der NT das Upstream-M-Bit. Auf diese Weise kann eine TEE feststellen, ob der Managementkanal vom NT korrekt empfangen wird, d. h., ob gegebenenfalls ein Konflikt mit einer anderen TEE vorliegt. Wenn das der Fall ist, zieht sich die TEE, die den Konflikt festgestellt hat, vom Bus zurück. Die Steuerbits L und R werden weiter unten erläutert.

Für die oben angegebenen TEE-Grundtypen werden Container mit unterschiedlicher Länge des Datenfeldes benötigt. Es werden beispielsweise folgende Containertypen eingesetzt:

| TEE-Typ | Datenfeldlänge | Gesamtlänge | Bemerkung |
|---|---|---|---|
| 1,2 | 19 Bit | 24 Bit | Basiscontainer (BC) |
| 3 | 256 Bit | 261 Bit | Container 2,048 Mbit/s |
| 4 | 288 Bit | 293 Bit | Container 2,304 Mbit/s |

In Upstream-Richtung senden die TEE synchron zu den von ihnen empfangenen Containern des NT. Durch einen Laufzeitausgleich wird dafür gesorgt, daß am NT Upstream- und Downstream-Container phasengleich vorliegen. Rahmensynchronsignale sind also nicht mehr erforderlich.

In Upstream-Richtung wird - wie bereits erwähnt - ein anderes Containerformat verwendet als in Downstream-Richtung. Ein Container in Upstream-Richtung beginnt gemäß Fig. 4 mit einem festen, beispielsweise drei Bit langen Bitmuster, das für den automatischen Laufzeitausgleich benötigt wird. Das Bitmuster besteht hier aus den drei aufeinander folgenden Bits 0, 1 und 0. Danach folgen ein Managementkanal M und das Datenfeld. Am Ende des Containers liegt wieder ein Ausgleichsbit A.

Der Laufzeitausgleich für von den einzelnen TEE gesendete Container wird beispielsweise wie folgt durchgeführt:
Im Empfänger des NT wird durch den Phasendetektor anhand des Bitmusters am Anfang eines ankommenden Upstream-Containers eine eventuelle Abweichung der Phasenlage dieses Containers vom korrekten Wert gemessen. Aus einer ermittelten Abweichung wird ein Korrektursignal gebildet, das mittels der Bits L und R im Downstream-Container zu der TEE übertragen wird, die den entsprechenden Container sendet. Abhängig von diesem Korrektursignal verschiebt der Phasenschieber dieser TEE die Lage des Upstream-Containers in der einen oder in der anderen Richtung (rechts oder links) um eine bestimmte Schrittweite, bis die korrekte Phasenlage erreicht ist. Die Bedeutung der Bits L und R geht aus der folgenden Tabelle hervor:

| L | R | Reaktion der TEE |
|---|---|---|
| 0 | 0 | Phasenlage beibehalten |
| 0 | 1 | Container einen Schritt nach rechts schieben |
| 1 | 0 | Container einen Schritt nach links schieben |
| 1 | 1 | ignorieren (illegaler Zustand) |

Für den Laufzeitausgleich werden in den TEE als Phasenschieber beispielsweise Schieberegister eingesetzt. Diese Schieberegister sind umso länger, je größer die maximal auszugleichende Laufzeit und je kleiner die kleinste Schrittweite sind. Gleichzeitig steigt die erforderliche Taktfrequenz, mit der das Schieberegister betrieben wird, bei kleinerwerdender Schrittweite an. Sinnvolle Werte für eine maximale Laufzeit und eine minimale Schrittweite sind bei einer Datenrate von 2,56 Mbit/s beispielweise:

| | |
|---|---|
| Maximale Laufzeit: | 3,125 µs (8 Bit) |
| Minimale Schrittweite: | 48,8 ns (0,125 Bit). |

Hierbei werden ein Schieberegister von 64 Bit und eine Taktfrequenz von 20,48 MHz benötigt.

## Patentansprüche

1. Schaltungsanordnung zur digitalen Datenübertragung zwischen einer Vermittlungsstelle eines Fernmeldenetzes und an dieselbe über Leitungen angeschlossenen Teilnehmern, bei welcher in räumlicher Nähe der Teilnehmer ein Endverzweiger mit einem Netzabschluß in den Übertragungsweg eingeschaltet ist, dadurch gekennzeichnet,
- daß zwischen dem Endverzweiger (EVZ) und den Teilnehmern (Tln) Leitungen (B) mit metallischen Leitern verwendet sind,
- daß an jede dieser Leitungen (B) mindestens zwei bei Teilnehmern (Tln) befindliche Endeinrichtungen (TEE) zum Senden und Empfangen von Daten angeschlossen sind,
- daß in dem Netzabschluß (NT) für jede angeschlossene Leitung (B) ein Phasendetektor angeordnet ist,
- daß in jeder Endeinrichtung (TEE) ein Phasenschieber zur zeitlichen Verschiebung der Sendedaten angeordnet ist und
- daß die von einer Endeinrichtung (TEE) gesendeten Daten nach Maßgabe eines vom Phasendetektor ausgesandten Korrektursignals vom Phasenschieber dieser Endeinrichtung (TEE) in eine bestimmte Phasenlage gebracht werden.

2. Schaltungsanordnung nach Anspruch 1, dadurch gekennzeichnet, daß bei Sendebeginn von jeder Endeinrichtung (TEE) ein Bitmuster ausgesendet wird, das vom Phasendetektor ausgewertet und zum Aussenden des Korrektursignals verwertet wird.
